# EUROPÄISCHE PATENTSCHRIFT

(11) **EP 0 993 515 B1**
(45) Veröffentlichungstag und Bekanntmachung des Hinweises auf die Patenterteilung: **16.01.2002**
(21) Anmeldenummer: 98922564.4
(22) Anmeldetag: 12.06.1998
(51) Int. Cl.: D04B 27/26

(54) **KETTENWIRKMASCHINE, INSBESONDERE HÄKELGALONMASCHINE**
WARP KNITTING LOOM, IN PARTICULAR CROCHET GALLOON MACHINE
METIER A MAILLES JETEES EN PARTICULIER MACHINE A CROCHET

(30) Priorität: 04.07.1997 CH 163797
(43) Veröffentlichungstag der Anmeldung: 19.04.2000
(73) Patentinhaber: TEXTILMA AG, 6052 Hergiswil / NW (CH)
(72) Erfinder: FRASSI, Fiorenzo, I-20039 Varedo (IT); DESTRI, Pierpaolo, Maria, I-20092 Cinisello Balsamo (IT)
(74) Vertreter: Schmauder, Klaus Dieter
(86) Internationale Anmeldenummer: CH9800244
(87) Internationale Veröffentlichungsnummer: WO9901600

(56) Entgegenhaltungen:
- EP-A- 0 757 125
- WO-A-81/01223
- WO-A-92/13127
- DE-A- 2 119 053
- DE-A- 2 257 224
- DE-A- 4 127 344
- US-A- 4 196 456

## Beschreibung

### Technisches Gebiet

Die Erfindung betrifft eine Kettenwirkmaschine insbesondere eine Häkelgalonmaschine gemäss Oberbegriff des Anspruches 1.

### Stand der Technik

Kettenwirkmaschinen der eingangs genannten Art sind mehrfach bekannt, so beispielsweise aus der WO 92/13127, bei der Legebarren mittels eines Summengetriebes individuell antreibbar sind, wobei einzelne Verdrängerelemente unterschiedliche Verdrängungsgrade aufweisen und mittels Koppelorganen mit einer mustermässig steuerbaren Stellvorrichtung verbunden sind. Dieser Antrieb ist relativ kompliziert und es müssen relativ grosse Massen bewegt werden, die den Antrieb sehr träge machen und die Leistung von Kettenwirkmaschinen stark begrenzen. Ausserdem benötigt der Antrieb durch die Anzahl der Verdrängerelemente, der Zwischenelemente und der Koppelorgane zu einer mustermässigen Stellvorrichtung ein erhebliches Bauvolumen, was sehr nachteilig ist, da die Legebarren nahe der Wirkstelle anzuordnen sind und dementsprechend der zur Verfügung stehende Raum für Antriebselemente sehr beschränkt ist.

Aus der DE-OS 21 19 053 ist eine Einrichtung zur Fachbildung an Webstühlen bekannt, bei der Kettfäden mit einem Linearmotor angetrieben werden, wobei in einem gemeinsamen Stator Antriebsglieder angeordnet sind, die jeweils mindestens einen Kettfaden bewegen. Es ist nicht erkennbar, dass ein solcher Linearmotor auch zum Antrieb einer Legebarre einer Kettenwirkmaschine geeignet sein könnte.

Ein Linearmotor zum Antrieb einer Legebarre wird hingegen in der EP-A-0 757 125 beschrieben.

### Darstellung der Erfindung

Aufgabe der Erfindung ist es, eine Kettenwirkmaschine, insbesondere Häkelgalonmaschine der eingangs genannten Art weiter zu verbessern.

Die gestellte Aufgabe wird erfindungsgemäss gelöst durch die kennzeichnenden Merkmale des Anspruches 1.

Dadurch, dass ein elektronisch steuerbarer Linearmotor mindestens zwei jeweils mit einem Legebarren verbundene Antriebsglieder aufweist, die in einem gemeinsamen Stator mit einem geschlossenen Magnetkreis hin- und hergehend geführt sind, wobei überdies pro Antriebsglied mindestens eine mit der Steuervorrichtung verbundene Antriebspule vorhanden ist, deren Windungsebene in Magnetflussrichtung ausgerichtet ist, ergibt sich ein ausserordentlich kleinbauender und dennoch wirksamer Antrieb für die Legebarren, der überdies auf einfache Weise mit einer elektronischen Steuervorrichtung gesteuert werden kann, so dass eine bisher unbekannte Kleinbauweise des Antriebes möglich ist. Dementsprechend sind die Massen und Reibungskräfte ausserordentlich gering und die elektronische Steuerung direkt und wirksvoll, so dass hohe Antriebsgeschwindigkeiten bei kleinstem Verschleiss, geringster Geräuschentwicklung und minimalstem Energieverbrauch möglich sind. Ausserdem wird ein hohes Mass an Steuerflexibilität für Musterzwecke erreicht.

Vorteilhafte Ausgestaltungen der Erfindung sind in den Ansprüchen 2 bis 11 umschrieben.

Grundsätzlich ist es möglich, dass die Antriebsspule für den Antrieb der Antriebsglieder an Teilen des Stators angeordnet ist und an den Antriebsgliedern lediglich Permanentmagnete vorgesehen sind. Vorteilhafter ist jedoch die Ausgestaltung nach Anspruch 2, da sie eine einfachere, wirkungsvollere und individuellere Steuerung der Antriebsglieder ermöglicht.

Die Antriebskraft lässt sich erhöhen, wenn an dem Antriebsglied nicht nur eine Antriebsspule vorhanden ist sondern zwei oder mehr Antriebsspulen in Bewegungsrichtung hintereinander angeordnet sind.

Eine besonders vorteilhafte Ausgestaltung des Stators beschreibt Anspruch 4, wobei die Weiterbildung nach Anspruch 5 besonders bevorzugt ist.

Die Magnete des Stators können elektrische Erregermagnete sein vorzugsweise sind sie jedoch gemäss Anspruch 6 als Permanentmagnete ausgebildet.

Besonders vorteilhaft ist eine Ausgestaltung nach Anspruch 7, da dann erkennbar ist, welche Position das Antriebsglied jeweils einnimmt, so dass nicht mit konstantem Hub gegen Endanschläge gearbeitet werden muss, sondern die Steuervorrichtung auch veranlassen kann, bis in welche Position das Antriebsglied verfahren werden soll. Besonders mit der Weiterbildung der Kettenwirkmaschine nach Anspruch 8 ist eine exakte Steuerung des Antriebsgliedes hinsichtlich der Grösse des Verschiebeweges und der Anhalteposition möglich, wodurch eine optimale Musterung des herzustellenden Kettengewirkes möglich ist.

Grundsätzlich ist es denkbar, dass das Antriebsglied gemäss Anspruch 10 eine kurvenförmige hin- und hergehende Bewegung ausführt, besonders vorteilhaft ist jedoch die Ausgestaltung nach Anspruch 9.

Vorteilhaft ist eine Weiterbildung nach Anspruch 11. Die Kühlvorrichtung kann beispielsweise ein Sauggebläse sein, das Warmluft absaugt und damit gleichzeitig auch zur Reinigung des Linearmotores dient. Eine intensivere Kühlung wird jedoch erreicht, wenn die Kühlvorrichtung zur Zufuhr von Kühlluft ausgebildet ist.

### Kurze Beschreibung der Zeichnungen

Ausführungsbeispiele der Erfindung werden nachfolgend anhand schematischer Zeichnungen näher beschrieben, dabei zeigen:
- Figur 1: die Legebarre einer Kettenwirkmaschine mit einem Linearmotor in Ansicht auf die Längsseite der Legebarre;
- Figur 2: den Linearmotor der Figur 1 im Schnitt II-II der Figur 3;
- Figur 3: den Linearmotor im Schnitt III-III der Figur 2; und
- Figur 4: die Anordnung von zwei Linearmotoren.

### Wege zur Ausführung der Erfindung

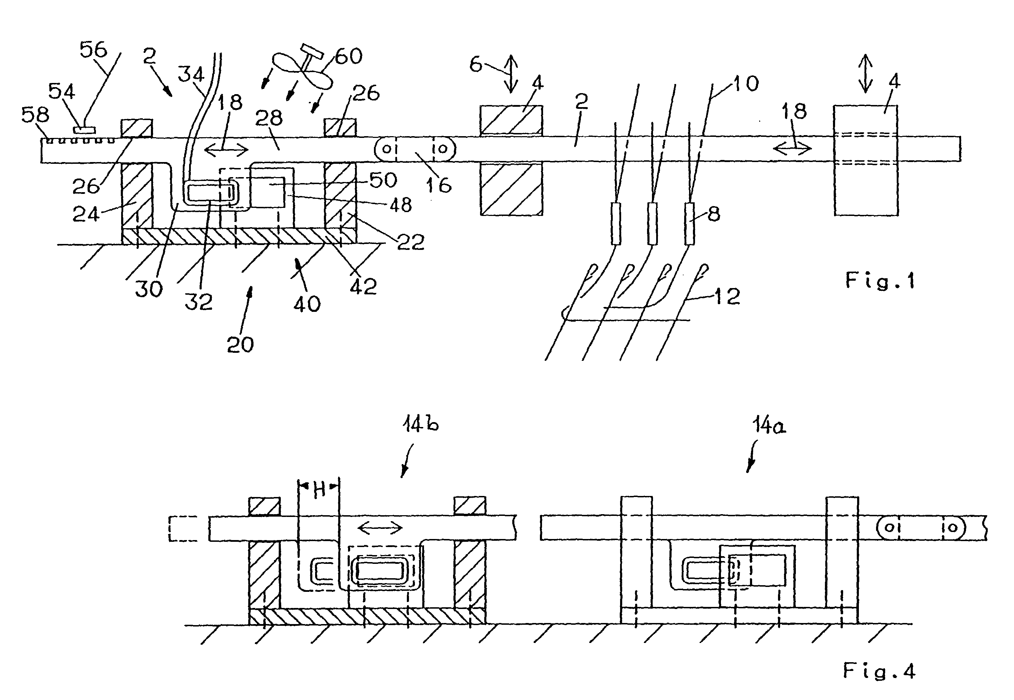

Die Figur 1 zeigt eine Legebarre 2 einer Kettenwirkmaschine in schematischer Darstellung und in dem Umfang, wie es für die vorliegende Erfindung erforderlich ist, da Kettenwirkmaschinen und insbesondere Häkelgalonmaschinen in grosser Zahl bekannt sind.

Die Legebarre 2 ist in Lagern 4 in Längsrichtung verschieblich gelagert, wobei die Lager ihrerseits je nach Ausführungsart gegebenenfalls eine auf- und abgehende Bewegung entsprechend dem Pfeil 6 ausführen können, um mittels Fadenführer 8 einen Faden 10 in Wirknadeln 12 einzulegen. Ein Linearmotor 14 ist über ein Koppelglied 16 an der Legebarre 2 angeschlossen und verleiht dieser eine hin- und hergehende Bewegung 18.

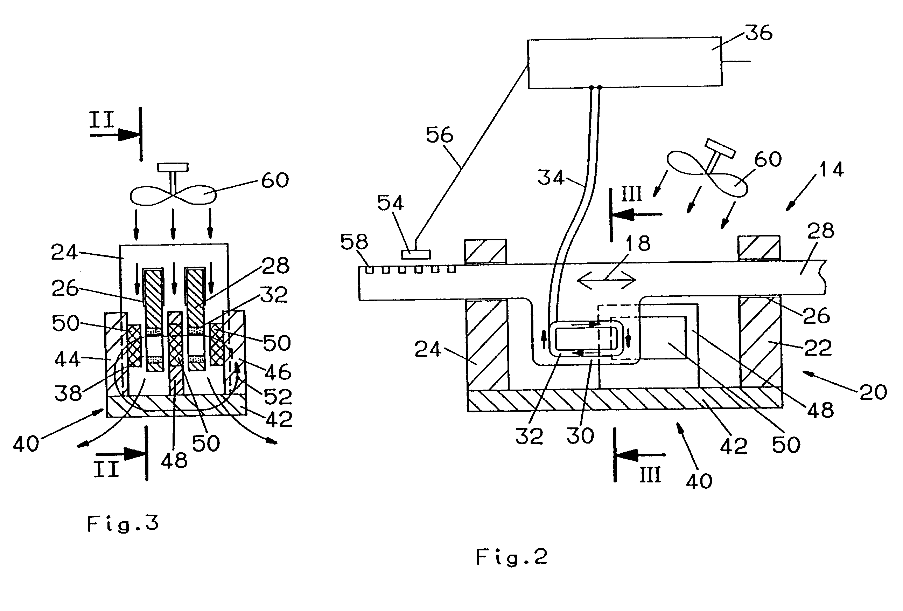

Der in den Figuren 2 und 3 näher dargestellte Linearmotor enthält einen Stator 20, an dem ein vorderer Lagerbock 22 und ein hinterer Lagerbock 24 angeordnet sind, die in Lagern 26 ein Antriebsglied 28 hin- und herverschieblich führen, das mittels des Koppelgliedes 16 mit der Legebarre 2 verbunden ist. Das Antriebsglied 28 ist mit einer nach unten verlaufenden Erweiterung 30 versehen, in der eine Antriebsspule 32 angeordnet ist, die über Leitungen 34 mit einer Steuervorrichtung 36 verbunden ist. Diese Erweitung 30 greift hin- und hergehend in eine Gasse 38 des Stators 20 ein, der einen Kern 40 aus magnetisch leitendem Material enthält. Dieser Kern wird gebildet durch einen Basisteil 42, an dem Endteile 44,46 vorstehen, zwischen denen ein oder mehrere Zwischenteile 48 angeordnet sind, die die Gassen 38 bilden. An den Endteilen 44,46 und am Zwischenteil 48 sind Magnete 50 befestigt, die vorzugsweise Permantmagnete sind und mit dem Kern einen peripherisch geschlossenen Magnetkreis 52 erzeugen, bei dem die von Nord nach Süd verlaufenden Feldlinien einerseits zwischen den Magneten und damit auch zwischen den in den Gassen angeordneten Antriebsspulen 32 verlaufen und sich über die Endteile und den Basisteil schliessen. Um diesen Magnetkreis nicht zu stören, bestehen die den Magnet 50 tragenden Zwischenteile 48 aus magnetisch nicht leitenden Werkstoff. Im vorliegenden Beispiel weist der Linearmotor einen Zwischenteil 48 auf, der den Bereich zwischen den Endteilen 44 und 46 in zwei Gassen 38 unterteilt, in denen jeweils ein Antriebsglied 28 angeordnet ist. Die Anordnung kann auch ohne weiteres so getroffen werden, dass eine grössere Zahl von Gassen und Antriebsgliedern 28 angeordnet sein kann.

Der Linearmotor ist weiter so ausgestaltet, dass er mit einem Sensor 54 zur Lageerkennung des Antriebsgliedes 28 zusammenwirkt, der über eine Leitung 56 mit der Steuervorrichtung 36 verbunden ist. Zur Lageerkennung sind am Antriebsglied 28 oder an einem sonstigen mit dem Antriebsglied verbundenen Organ wie beispielsweise der Legebarre Positionsmarkierer 58 angeordnet, so dass über die Steuervorrichtung 36 feststellbar ist, in welcher Position sich das Antriebsglied 28 befindet. Der Linearmotor ist weiter mit einer Kühlvorrichtung 60 in Form eines Gebläses ausgestattet, welches Kühlluft über und durch den Linearmotor bläst. Auch eine Kühlung mit Öl ist möglich.

Der Linearmotor wird mittels eines gepulsten Stromes wechselnder Richtung hin- und hergehend angetrieben und gebremst, wobei die Frequenz des gepulsten Stromes die Antriebsgeschwindigkeit bestimmt. Die Steuervorrichtung ist nun so ausgestaltet, dass sie anhand einer entsprechenden analogen oder digitalen Software das Antriebsglied bis zu einer vorbestimmbaren Position bewegen kann und in dieser Position auch hält. Damit ist es möglich, das Antriebsglied 28 beispielsweise entsprechend dem herzustellenden Muster an den Legebarren mustermässig in unterschiedlichen Bewegungsabläufen und -grössen zu steuern. Die Steuerung des Antriebes kann auf verschiedene an sich bekannte Arten erfolgen.

Bei der Steuerung nach der Differenz- bzw. Absolutmethode wird der Weg mit einer absoluten Vergleichsgrösse verglichen. Die Steuerung weiss stets in welcher Stellung sich das Antriebsglied befindet. Selbst nach dem Ausschalten und Neustarten der Kettenwirkmaschine kann aus der jeweiligen Stellung des Antriebsgliedes weitergefahren werden.

Bei der Inkrementalmethode wird der Zuwachs des Weges als Messgrösse verwendet und das Antriebsglied muss bei jedem Neustart der Kettenwirkmaschine aus einer durch einen Anschlag bestimmten Null- bzw. Grundstellung anfahren.

Die Figur 4 zeigt, dass in einer Kettenwirkmaschine mehrere Linearmotoren angeordnet sein können, die jeweils mehrere zum Beispiel 10 Legebarren antreiben. Im Beispiel der Figur 4 folgt einem vorderen Linearmotor 14a ein nach hinten versetzter zweiter Linearmotor 14b, wobei die Linearmotoren jeweils den variablen Hub H ausführen.

### BEZUGSZEICHENLISTE

- H: Hub
- 2: Legebarre
- 4: Lager
- 6: Bewegung
- 8: Fadenführer
- 10: Faden
- 12: Wirknadel
- 14: Linearmotor
- 14a: vorderer Linearmotor
- 14b: hinterer Linearmotor
- 16: Koppelglied
- 18: Bewegung
- 20: Stator
- 22: Lagerbock vorderer
- 24: Lagerbock hinterer
- 26: Lager
- 28: Antriebsglied
- 30: Erweiterung
- 32: Antriebsspule
- 34: Leitung
- 36: Steuervorrichtung
- 38: Gasse
- 40: Kern
- 42: Basisteil
- 44: Endteil
- 46: Endteil
- 48: Zwischenteile
- 50: Magnete
- 52: Magnetkreis
- 54: Sensor
- 56: Leitung
- 58: Positionsmarkierer
- 60: Kühlvorrichtung

## Patentansprüche

1. Kettenwirkmaschine, insbesondere Häkelgalomaschine, mit individuell antreibbaren und mittels einer Steuervorrichtung (36) steuerbaren Legebarren (2), mit einem elektronisch steuerbaren Linearmotor (14,14a,14b) mit mindestens zwei jeweils mit einem Legebarren (2) verbundenen Antriebsgliedern (28), wobei pro Antriebsglied (28) mindestens eine mit der Steuervorrichtung (36) verbundene Antriebsspule (32) vorhanden ist, deren Windungsebene in Magnetflussrichtung ausgerichtet ist, **dadurch gekennzeichnet, dass** die Antriebsglieder (28) in einem gemeinsamen Stator (20) mit einem geschlossenen Magnetkreis (52) hin- und hergehend geführt sind.

2. Kettenwirkmaschine nach Anspruch 1, **dadurch gekennzeichnet, dass** die Antriebsspule (32) am Antriebsglied (28) angeordnet ist.

3. Kettenwirkmaschine nach einem der Ansprüche 1 oder 2, **dadurch gekennzeichnet, dass** je Antriebsglied (28) zwei in Bewegungsrichtung hintereinander angeordnete Antriebsspulen (32) vorhanden sind.

4. Kettenwirkmaschine nach einem der Ansprüche 1 bis 3, **dadurch gekennzeichnet, dass** die Antriebsglieder (28) jeweils in einer Gasse (38) des Stators (20) angeordnet sind, der beidseits der Antriebsglieder (28) Magnete (50) aufweist, die über einen aus magnetisch leitenden Werkstoff bestehenden Kern (40) einen peripherisch geschlossenen Magnetkreis (52) bilden.

5. Kettenwirkmaschine nach Anspruch 4, **dadurch gekennzeichnet, dass** der Kern (40) einen Basisteil (42) und zwei von diesen vorstehende Endteile (44,46) aufweist, die zusammen mit mindestens einem vom Basisteil (42) vorstehenden Zwischenteil (48), der vorzugsweise aus magnetisch nicht leitenden Werkstoff besteht, die Gassen (38) für die Antriebsglieder (28) bildet.

6. Kettenwirkmaschine nach Anspruch 4 oder 5, **dadurch gekennzeichnet, dass** die Magnete (50) Permanentmagnete sind.

7. Kettenwirkmaschine nach einem der Ansprüche 1 bis 6, **dadurch gekennzeichnet, dass** jedem Antriebsglied (28) ein Sensor (54) zur Lageerkennung zugeordnet ist, der mit der Steuervorrichtung (36) verbunden ist.

8. Kettenwirkmaschine nach einem der Ansprüche 1 bis 7, **dadurch gekennzeichnet, dass** die Steuervorrichtung (36) derart ausgebildet ist, dass jedes Antriebsglied (28) individuell in beliebige Positionen steuerbar ist.

9. Kettenwirkmaschine nach einem der Ansprüche 1 bis 8, **dadurch gekennzeichnet, dass** jedes Antriebsglied (28) geradlinig hin- und hergehend geführt ist.

10. Kettenwirkmaschine nach einem der Ansprüche 1 bis 8, **dadurch gekennzeichnet, dass** jedes Antriebsglied (28) bogenförmig hin- und hergehend geführt ist.

11. Kettenwirkmaschine nach einem der Ansprüche 1 bis 10, **dadurch gekennzeichnet, dass** dem Linearmotor (14,14a,14b) eine Kühlvorrichtung (60), vorzugsweise zur Zufuhr von Kühlmedium wie zum Beispiel Kühlluft zugeordnet ist.

## Claims

1. Warp knitting machine, especially crochet galloon machine, with guide bars (2) which can be driven individually and can be controlled by means of a control device (36), with an electronically controllable linear motor (14, 14a, 14b) with at least two drive members (28), there being present for each drive member (28) at least one drive coil(32) which is connected to the control device (36) and the winding plane of which is oriented in the magnetic flux direction, **characterized in that** the drive members (28)are connected in each case to a guide bar (2) and which are guided to and fro in a common stator (20) by means of a closed magnetic circuit (52).

2. Warp knitting machine according to Claim 1, **characterized in that** the drive coil (32) is arranged on the drive member (28).

3. Warp knitting machine according to one of Claims 1 or 2, **characterized in that**, for each drive member (28), there are two drive coils (32) arranged one behind the other in the direction of movement.

4. Warp knitting machine according to one of Claims 1 to 3, **characterized in that** the drive members (28) are arranged in each case in a slot (38) of the stator (20) which has, on both sides of the drive members (28), magnets (50) which form a peripherally closed magnetic circuit (52) via a core (40) consisting of magnetically conductive material.

5. Warp knitting machine according to Claim 4, **characterized in that** the core (40) is a base part (42) and two end parts (44, 46) which project from the latter and which, together with at least one intermediate part (48) projecting from the base part (42) and consisting preferably of magnetically non-conductive material, forms the slots (38) for the drive members (28).

6. Warp knitting machine according to Claim 4 or 5, **characterized in that** the magnets (50) are permanent magnets.

7. Warp knitting machine according to Claims 1 to 6, **characterized in that** each drive member (28) is assigned a sensor (54) for position recognition, the said sensor being connected to the control device (36).

8. Warp knitting machine according to one of Claims 1 to 7, **characterized in that** the control device (36) is designed in such a way that each drive member (28) can be controlled individually into any desired position.

9. Warp knitting machine according to one of Claims 1 to 8, **characterized in that** each drive member (28) is guided to and fro in a straight line.

10. Warp knitting machine according to one of Claims 1 to 8, **characterized in that** each drive member (28) is guided to and fro in an arc-shape.

11. Warp knitting machine according to one of Claims 1 to 10, **characterized in that** the linear motor (14, 14a, 14b) is assigned a cooling device (60), preferably for the supply of cooling medium such as, for example, cooling air.

## Revendications

1. Métier à tricoter chaîne, notamment métier à crocheter les galons comportant des barres à passettes (2), entraînées individuellement et commandées à l'aide d'un dispositif de commande (36), comprenant un moteur linéaire à commande électronique (14, 14a, 14b) avec au moins deux éléments d'entraînement (28), reliés chaque fois à une barre à passettes (2), et au moins pour chaque élément d'entraînement (28), une bobine d'entraînement (32) reliée au dispositif de commande (36) le plan d'enroulement de la bobine étant aligné dans la direction du flux magnétique,
**caractérisé en ce que**
les éléments d'entraînement (28) sont guidés suivant un mouvement de va et vient dans un stator (20), propre ayant un circuit magnétique fermé (52).

2. Métier à tricoter chaîne selon la revendication 1,
**caractérisé en ce que**
la bobine d'entraînement (32) est prévue sur l'élément d'entraînement (28).

3. Métier à tricoter chaîne selon l'une des revendications 1 ou 2,
**caractérisé en ce que**
deux bobines d'entraînement (32) sont prévues l'une derrière l'autre dans la direction de déplacement pour chaque élément d'entraînement (28).

4. Métier à tricoter chaîne selon l'une quelconque des revendications 1 à 3,
**caractérisé en ce que**
les éléments d'entraînement (28) sont prévus chaque fois dans un couloir (38) du stator (20), celui-ci étant muni d'aimants (50) de part et d'autre des éléments d'entraînement (28), ces aimants formant un circuit magnétique (52) fermé en périphérie, en passant par un noyau (40) en une matière conductrice magnétique.

5. Métier à tricoter chaîne selon la revendication 4,
**caractérisé en ce que**
le noyau (40) comprend une partie de base (42) et deux pièces d'extrémité (44, 46) en saillie par rapport à celle-ci qui forment les couloirs (38) pour les éléments d'entraînement (28), ensemble avec au moins une partie de base (42) dépassant de la partie intermédiaire (48), de préférence en une matière non-conductrice magnétiquement.

6. Métier à tricoter chaîne selon l'une des revendications 4 ou 5,
**caractérisé en ce que**
les aimants (50) sont des aimants permanents.

7. Métier à tricoter chaîne selon l'une quelconque des revendications 1 à 6,
**caractérisé en ce qu'**
un capteur (54) de détection de position est associé à chaque élément d'entraînement (28), ce capteur étant relié au dispositif de commande (36).

8. Métier à tricoter chaîne selon l'une quelconque des revendications 1 à 7,
**caractérisé en ce que**
le dispositif de commande (36) est tel que chaque élément d'entraînement (28) peut être commandé individuellement dans des positions quelconques.

9. Métier à tricoter chaîne selon l'une quelconque des revendications 1 à 8,
**caractérisé en ce que**
chaque élément d'entraînement (28) est guidé en va et vient suivant un chaînon rectiligne.

10. Métier à tricoter chaîne selon l'une quelconque des revendications 1 à 8,
**caractérisé en ce que**
chaque élément d'entraînement (28) est guidé en va-et-vient selon un chemin courbe.

11. Métier à tricoter chaîne selon l'une quelconque des revendications 1 à 10,
**caractérisé en ce qu'**
un dispositif de refroidissement (60) fournissant de préférence un fluide de refroidissement comme par exemple de l'air est associé au moteur linéaire (14, 14a, 14b).
